(19) Europäisches Patentamt / European Patent Office / Office européen des brevets

(11) **EP 2 549 833 A1**

(12) **EUROPÄISCHE PATENTANMELDUNG**

(43) Veröffentlichungstag:
**23.01.2013 Patentblatt 2013/04**

(51) Int Cl.:
*H05B 7/148* (2006.01)          *F27B 3/28* (2006.01)

(21) Anmeldenummer: **11174514.7**

(22) Anmeldetag: **19.07.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **SIEMENS AKTIENGESELLSCHAFT**
**80333 München (DE)**

(72) Erfinder:
• **Döbbeler, Arno**
  **91074 Herzogenaurach (DE)**
• **Fink, Dieter**
  **91088 Bubenreuth (DE)**
• **Rieger, Detlef**
  **85598 Baldham (DE)**

(54) **Verfahren zum Betreiben eines Lichtbogenofens und Schmelzanlage mit einem nach diesem Verfahren betriebenen Lichtbogenofen**

(57)    Bei einem Verfahren zum Betreiben eines mit einer Wechselspannung betriebenen Lichtbogenofens (2) sowie bei einer Schmelzanlage mit einem nach diesem Verfahren betriebenen Lichtbogenofen (2) wird ein an einer Wand des Lichtbogenofens (2) auftretendes Körperschallsignal (S) erfasst, aus dem ein die Flickereigenschaften des Lichtbogenofens (2) charakterisierender Parameter K berechnet wird, und es wird anhand des berechneten Parameters K zumindest eine Prozessgröße des Lichtbogenofens (2) gesteuert.

FIG 1

**Beschreibung**

Die Erfindung bezieht sich auf ein Verfahren zum Betreiben eines Lichtbogenofens. Außerdem bezieht sich die Erfindung auf eine Schmelzanlage mit einem nach diesem Verfahren betriebenen Lichtbogenofen.

In einem Lichtbogenofen wird stückiges Schmelzgut, in der Regel Metallschrott, gegebenenfalls zusammen mit weiteren Zuschlagstoffen durch einen zwischen dem Schmelzgut und mindestens einer Elektrode gezündeten Lichtbogen aufgeschmolzen.

Dabei hat sich gezeigt, dass vor allem Lichtbogenöfen, die praktisch ausschließlich mit Schrott beschickt werden, unerwünschte Netzrückwirkungen erzeugen. Zu diesem Zweck werden deshalb in Stahlwerken Kompensationsanlagen, sogenannte SVC-Systeme oder statische Blindleitungskompensatoren, installiert, um Netzrückwirkungen wie Oberwellen oder den sogenannten Flicker zu reduzieren und international vorgeschriebene Grenzwerte einzuhalten. Solche SVC-Systeme reagieren jedoch nur im Nachgang auf eine bereits erzeugte Netzstörung, d.h. auf die im Lichtbogenofen beim Schrotteinschmelzen erzeugten Oberwellen oder Flicker, und können, insbesondere dann, wenn die Lichtbogenöfen an schwachen Versorgungsnetzen betrieben werden, ein Einhalten der vorgeschriebenen Grenzwerte nicht sicherstellen.

Zum Vermeiden hoher Flickerwerte ist es im Stand der Technik bekannt, den Schrott in einer Mischung zuzuführen die einen niedrigen sogenannten Kst-Wert aufweist. Dieser Kst-Wert beschreibt gemäß der IEC-Norm 61000-3-7 die Art, Schwere und Dichte des Schrotts und liegt in der Regel zwischen 48 und 85 liegen. Außerdem werden im Ofenkreis sogenannte Zusatzreaktanzen eingebracht, beispielsweise eine Ofentrafovordrossel, und es erfolgt eine regelungstechnische Parametrisierung zur Lichtbogenstabilisierung. Auch neuere SVC-Systeme auf IGBT-Technik werden eingesetzt, wenn eine hohe Verbesserung der Flickerwerte notwendig ist. Durch derartige SVC-Systeme wird das erzeugte Frequenzspektrum der Störung in einen höheren Frequenzbereich transformiert, so dass diese nicht mehr in den Messbereich der Flickernetzstörung gemäß internationalen Normen fällt. Diese Maßnahmen sind jedoch entweder mit hohen Investitionskosten oder aber mit Einbußen bei der Produktion verbunden. Darüber hinaus hat nicht nur die Zusammensetzung des Schrotts und dessen Qualität einen Einfluss auf Netzrückwirkungen. Vielmehr hat auch die Fahrweise während des Schrotteinschmelzens einen derartigen Einfluss. So können beispielsweise Schrottbewegungen und Schrotteinstürze Netzrückwirkungen erzeugen. Das Erkennen von Schrottbewegungen und Schrotteinstürzen ist jedoch weitgehend dem Bedienpersonal vorbehalten, so dass eine Regelung der Elektroden auf diese Ereignisse nur nachträglich, d.h. nach erfolgter Schrottbewegung und bereits eingetretener Netzrückwirkung reagieren kann.

Der Erfindung liegt deshalb die Aufgabe zu Grunde, ein Verfahren zum Betreiben eines Lichtbogenofens anzugeben, mit dem es möglich ist, die Schrottart und Schrottdichte, Schrottbewegungen und Schrotteinstürze automatisch zu erkennen, um das Auftreten von Flicker, die auf die Schrottdichte und Schrottbewegung zurückzuführen sind, vorhersagen und automatisch beim Steuern der Prozessgrößen des Lichtbogenofens berücksichtigen zu können. Außerdem liegt der Erfindung die Aufgabe zu Grunde, eine Schmelzanlage mit einem nach diesem Verfahren betriebenen Lichtbogenofen anzugeben.

Hinsichtlich des Verfahrens wird die genannte Aufgabe gemäß der Erfindung gelöst mit einem Verfahren mit den Merkmalen des Patentanspruches 1. Gemäß diesen Merkmalen wird bei einem mit einer Wechselspannung betriebenen Lichtbogenofen ein an einer Wand des Lichtbogenofens auftretendes Körperschallsignal S erfasst, aus dem ein die Flickereigenschaften des Lichtbogenofens charakterisierender Parameter K berechnet wird, und es wird anhand dieses berechneten Parameters K zumindest eine Prozessgröße des Lichtbogenofens gesteuert.

Der Erfindung liegt dabei die Erfahrung zugrunde, dass große Flickerwerte beziehungsweise hohe Kst-Werte entweder durch eine starke Bewegung des schmelzenden Schrotts oder durch die Anwesenheit von grobstückigem Schwerschrott unter dem Lichtbogen erzeugt werden. Im ersten Fall rutscht neuer, kalter Schrott unter die Elektroden und der Lichtbogen muss je nach Bedingungen heftig und schnell nachjustiert werden. Dadurch ändern sich der Strom und die Brennbedingung abrupt. Im zweiten Fall brennt der Lichtbogen instabil und mit flukturierendem Fußpunkt.

Zwar ist es grundsätzlich aus der WO 2009/095292 A1 und der WO 2009/095396 A1 bekannt, dass aus Körperschallmessungen an der Wand des Lichtbogenofens unter Einbeziehung der Strom- und Spannungsverläufe Signale extrahiert werden können, die eine Schrottbewegung beziehungsweise Schrottverlagerung und eine Masseveränderung an der Wand des Lichtbogenofens charakterisieren. Die Erfindung beruht jedoch auf der Überlegung, dass es möglich ist, durch eine spezialisierte Auswertung des oder der an der Wand des Lichtbogenofens auftretenden Körperschallsignale S einen Parameter K zu berechnen, der geeignet ist, vorausschauend die Flickereigenschaften des Lichtbogenofens zu detektieren. Dabei wird vorzugsweise als Parameter K eine mit einem Kst-Wert vergleichbare Maßzahl berechnet.

Insbesondere wird das Körperschallsignal S einer Fouriertransformation unterzogen, und es werden Amplituden der Fouriertransformierten F des Körperschallsignales S bei einer Vielzahl von Frequenzen f ermittelt, aus denen dann der Parameter K berechnet wird. Diese Vorgehensweise berücksichtigt die Beobachtung, dass bei Schrottverlagerung oder insbesondere Schrotteinstürzen sowohl sehr niederfrequente als auch hochfrequente Schwingungen auftreten, die unabhängig von den durch den Wechselspannungsbetrieb induzierten Schwingungen des Lichtbogens sind, die ein ganzzahliges Vielfaches einer Grundfrequenz $f_o$ betragen, die bei einer Betriebsfrequenz von 50Hz 100Hz beträgt. Darüber hinaus zeigt die Erfahrung, dass die Stabilität des Lichtbogens auch durch den Gehalt an Schwerschrott beeinflusst wird, so dass ein instabiles Brennen des Lichtbogens bei ruhendem Schrott einen Rückschluss auf den Schwerschrottgehalt erlaubt, der wiederum Ursache für unerwünschten Flicker ist. Dementsprechend werden in einer bevorzugten Ausgestaltung des Verfahrens aus den Amplituden der Fouriertransformierten F bei unterhalb der Grundfrequenz $f_o$ liegenden Frequenzen f ein Maß B für eine niederfrequente Schrottbewegung, aus den Amplituden der Fouriertransformierten F bei oberhalb der Grundfrequenz $f_o$ liegenden und die harmonischen Frequenzen nicht umfassenden Frequenzen f ein Maß E für eine hochfrequente Erschütterung und aus den Amplituden der Fouriertransformierten F bei harmonischen und zwischen den harmonischen Frequenzen liegenden Frequenzen f ein den Schwerschrottgehalt charakterisierendes Maß SSG ermittelt, aus denen der Parameter K berechnet wird.

In einer besonders bevorzugten Ausgestaltung des Verfahrens wird der Parameter K mit Hilfe folgender Beziehungen ermittelt:

$$SV = B * E \qquad\qquad (1)$$

mit

$$B = \sum_{n=n0}^{n1} F^{-\alpha}(f_n) \qquad\qquad (2)$$

und

$$1 \leq \alpha \leq 10$$

wobei $f_{n1} < f_0$ und $f_{n+1} - f_n = \Delta f \ll f_o$
und mit

$$E = \sum_{n=n2}^{n3} F^{\beta}(f_n) \qquad\qquad (3)$$

wobei $f_n \neq m^* f_o$ und $f_{n2} > f_o$, $2 \leq \beta \leq 10$ und m eine natürliche Zahl ist,
und

$$SSG = \left( \sum_{k=2}^{k_{max}} F(kf_0) \right) * \left( \sum_n F(f_n) \right) \Big/ F^2(f_0) \qquad\qquad (4)$$

mit $f_n \neq m^* f_0$ und $f_n > f_o$, wobei k und m natürliche Zahlen sind und $f_n$ die in Gleichung (3) verwendeten Frequenzen sind und für $k_{max} \leq 10$ gilt,
und der Parameter K mit der Gleichung

$$K = a * SV + b * SSG \qquad (5)$$

berechnet wird, wobei a und b experimentell ermittelte Gewichtsfaktoren sind.

Hinsichtlich der Schmelzanlage wird die Aufgabe gemäß der Erfindung gelöst mit einer Schmelzanlage mit den Merkmalen des Patentanspruches 6.

Zur weiteren Erläuterung der Erfindung wird auf das in den Figuren wiedergegebene Ausführungsbeispiel verwiesen. Es zeigen:

Fig. 1 eine Schmelzanlage gemäß der Erfindung in einer schematischen Prinzipdarstellung,

Fig. 2 ein Diagramm, in dem das gemessene Körperschallsignal gegen die Zeit aufgetragen ist,

Fig. 3 ein Diagramm, in dem die Amplitude der Fouriertransformierten des Körperschallsignals gegen die Frequenz aufgetragen ist.

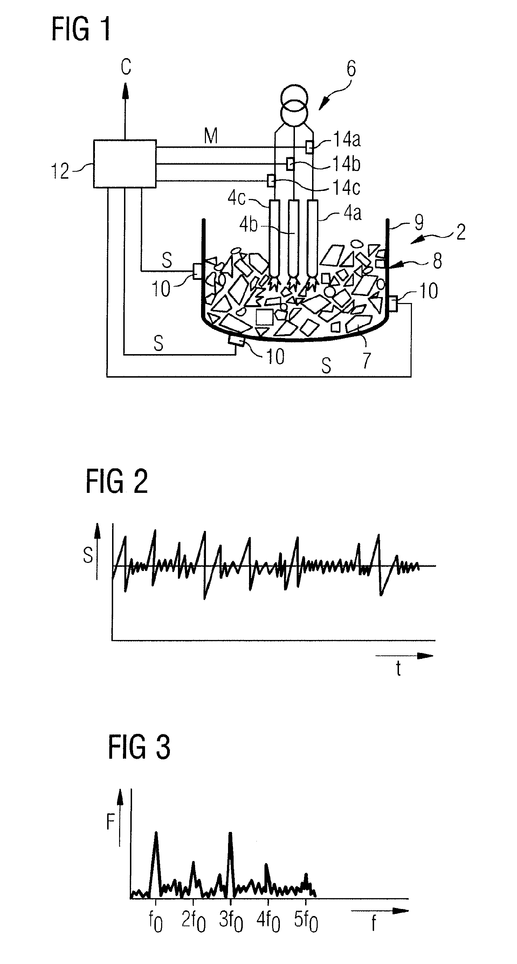

Gemäß Fig. 1 umfasst eine Schmelzanlage gemäß der Erfindung einen Lichtbogenofen 2 mit beispielsweise drei Elektroden 4a-c, die elektrisch an den Ofentransformator einer Stromversorgungseinrichtung 6 angeschlossen sind. Die Elektroden 4a-c tauchen in ein den aufzuschmelzenden Schrott 7 aufnehmendes Ofengefäß 8 ein, an dessen Wand 9 eine Mehrzahl von Körperschallaufnehmern 10 angeordnet sind. Die von den Körperschallaufnehmern 10 erfassten Körperschallsignale S werden zur weiteren Verarbeitung an eine Steuer- und Auswerteeinrichtung 12 übermittelt.

Zusätzlich zu den Körperschallsignalen S werden mit Hilfe von Messwertaufnehmern 14a-c der in den Elektroden 4 fließende Strom und/oder die an ihnen anliegende Spannung gemessen und die entsprechenden Messsignale M an die Steuer- und Auswerteeinrichtung 12 übermittelt. In dieser Steuer- und Auswerteeinrichtung werden Steuersignale C generiert, mit denen zumindest eine Prozessgröße des Lichtbogenofens 2 gesteuert oder geregelt wird.

Im Diagramm der Fig. 2 ist beispielhaft ein mit einem Körperschallaufnehmer 10 gemessenes Körperschallsignal S gegen die Zeit t aufgetragen, wobei grundsätzlich auch die von mehreren Körperschallaufnehmern 10 erzeugten Körperschallsignale S zu einem Summensignal zusammengefasst sein können. Von diesem Körperschallsignal S wird nun mittels Fouriertransformation (FFT) das Frequenzspektrum ermittelt, das im Fig. 3 wiedergegeben ist, in dem die Amplitude der Fouriertransformierten F gegen die Frequenz f aufgetragen ist. In dieser Fig. 3 ist zu erkennen, dass der Betrag (Amplitude) der Fouriertransformierten F für Frequenzen $f_o$, $2f_o$, $3f_o$, $4f_o$ und $5f_o$ signifikante Maxima aufweist, deren Höhe mit zunehmender Frequenz f abnimmt. Diese Maxima liegen bei harmonischen Frequenzen $mf_o$ zu einer Grundfrequenz $f_o$, d.h. entsprechen ganzzahligen Vielfachen dieser Grundfrequenz $f_o$, die das Doppelte der Frequenz der Spannung (Betriebsfrequenz) beträgt, mit der die Elektroden betrieben werden. Bei einer Betriebsfrequenz von 50Hz liegen diese harmonischen Frequenzen $f_o$ bei 100, 200, 300, 400 bzw. 500Hz.

Aus der Fouriertransformierten F kann nun ein Maß für die Schrottverlagerung SV aus dem aus einem Maß B für eine niederfrequente Schrottbewegung und einem Maß E für eine hochfrequente Erschütterung gebildeten Produkt

$$SV = B * E \qquad (1)$$

mit folgenden Beziehungen berechnet werden:
mit

$$B = \sum_{n=n0}^{n1} F^{-\alpha}(f_n) \qquad (2)$$

wobei $f_{n1} < f_0$ und $f_{n+1} - f_n = \Delta f << f_0$

Ein geeigneter Wert für $f_{no}$ ist beispielsweise 1Hz. Als Obergrenze $f_{n1}$ ist ein Wert geeignet, der deutlich unterhalb der Grundfrequenz $f_o$, vorzugsweise unterhalb der Betriebsfrequenz $f_o/2$ liegt und im Beispiel 30 Hz beträgt, wobei die

mit $-\alpha$ potenzierten Amplituden der Fouriertransformierten F bei Frequenzen $f_n$ addiert werden, die sich jeweils um $\Delta f = 1Hz$ entsprechend einer bei einer schnellen Fouriertransformation typischerweise erzielbaren Frequenzauflösung unterscheiden. Für den Parameter $\alpha$ gilt: $1 \leq \alpha \leq 10$, wobei sich $\alpha = 1$ als geeignet herausgestellt hat.

$$E = \sum_{n=n2}^{n3} F^\beta(f_n) \tag{3}$$

wobei $f_n \neq m^*f_0$ und $f_{n2} > f_0$ mit $2 \leq \beta \leq 10$ und m eine natürliche Zahl ist.

Zum Berechnen des Maßes E für die Erschütterung werden die mit $\beta$ potenzierten Amplituden der Fouriertransformierten F bei Zwischenfrequenzen $f_n \neq m^*f_0$ addiert, die hinreichend beabstandet von den harmonischen Frequenzen sind, so dass diese keinen Beitrag zu den verwendeten Amplituden leisten.

Da der Lichtbogen unter kaltem Schwerschrott instabil und mit flukturierendem Fußpunkt brennt, weist das erzeugte Körperschallspektrum, d. h. die Fouriertransformierte F sowohl stark erhöhte Amplituden bei den höheren harmonischen Frequenzen $mf_o$ als auch eine große Anzahl von Maxima bei zwischen den harmonischen Frequenzen $mf_o$ liegenden Zwischenfrequenzen auf. Ein Maß SSG für den Schwerschrottgehalt kann daher vorteilhaft durch folgende Beziehung ermittelt werden.

$$SSG = \left( \sum_{k=2}^{k_{max}} F(kf_0) \right) * \left( \sum_i F(f_i) \right) \Big/ F^2(f_0) \tag{4}$$

mit $f_n \neq m^*f_0$ und $f_n > f_o$, wobei k und m natürliche Zahlen und $f_n$ die in Gleichung (3) verwendeten Frequenzen sind und für $k_{max} \leq 10$ gilt.

Aus dem Maß SV für die Schrottverlagerung und dem Maß SSG für den Schwerschrottgehalt kann nun mit Hilfe von Gewichten a und b ein Parameter K mit der Beziehung

$$K = a * SV + b * SSG \tag{5}$$

bestimmt werden, wobei die Gewichte a, b experimentell aus der Korrelation des auf diese Weise berechneten Wertes und dem tatsächlich gemessenen Flicker bestimmt und derart angepasst werden, dass der auf diese Weise berechnete dynamische Parameter K mit einem Kst-Wert vergleichbar ist. Auf diese Weise kann somit während des Einschmelzvorgangs ein mit dem Kst-Wert korrelierter Parameter K berechnet werden, der die aktuelle Schrottbewegung und den aktuellen Schrottstatus beschreibt. Dieser berechnete Parameter K entspricht nicht genau dem Kst-Wert gemäß Definition der vorstehend genannten IEC-Norm, gibt aber den Verlauf und die Tendenz richtig wieder und kann daher optimal zur Flickervorhersage und zur Einstellung der Regelung zur Flickervermeidung verwendet werden.

Unter Einbeziehung weiterer Daten, insbesondere der Strom- und Spannungsverläufe, der Wandtemperaturen und/oder der eingebrachten spezifischen Energie kann nun ein übergeordnetes, komplettes Regelungssystem zur Prozessausführung erstellt werden, mit dem zustandsorientiert und schnell auf die im Lichtbogenofen stattfindenden dynamischen Veränderungen reagiert werden kann. Ein derartiges Steuer- bzw. Regelungssystem wirkt vorzugsweise auf die Spannungsstufe des Ofentransformators, die Impedanz- beziehungsweise Stromsollwerte für die Elektrodenregelung, die Zusatzreaktanzen und die Sollwertvorgaben für Brenner und Lanzen ein. Als Grundlage können dabei die Werte eines fest hinterlegten Fahrdiagramms verwendet werden, die durch das Regelungssystem dynamisch in vorgegebenen Grenzen verändert werden. Die Messung der dynamischen Veränderung des Schrotts während des Einschmelzprozesses im Lichtbogenofen wird kombiniert mit einem übergeordneten, modularen, beispielsweise Fuzzy-basierten Regelungssystem zur energetischen Prozessführung des Lichtbogenofens, welches den elektrischen Arbeitspunkt und die Sollwerte der Brenner- und Lanzensysteme vorgibt. Dies erlaubt ein dynamisches zustandsorientiertes Eingreifen in den Schmelzprozess. Unter Verwendung eines kompletten Regelungskonzeptes basierend auf linguistischen fuzzifizierten Regeln und weiteren analytischen Verrechnungen, unter anderem mit Hilfe eines analytischen Modells der Lastverteilung kann dann der Schmelzprozess so angepasst werden, dass der Flicker vorgeschriebene Grenzwerte nicht überschreitet.

**Patentansprüche**

1. Verfahren zum Betreiben eines mit einer Wechselspannung betriebenen Lichtbogenofens (2), bei dem ein an einer Wand des Lichtbogenofens (2) auftretendes Körperschallsignal (S) erfasst wird, aus dem ein die Flickereigenschaften des Lichtbogenofens (2) charakterisierender Parameter K berechnet wird und anhand des berechneten Parameters K zumindest eine Prozessgröße des Lichtbogenofens (2) gesteuert wird.

2. Verfahren nach Anspruch 1,
bei dem der Parameter K eine mit einem Kst-Wert vergleichbare Maßzahl ist.

3. Verfahren nach Anspruch 1 oder 2,
bei dem das Körperschallsignal (S) einer Fouriertransformation unterzogen wird, und bei dem die Amplituden der Fouriertransformierten F bei einer Vielzahl von Frequenzen f ermittelt werden, aus denen der Parameter K berechnet wird.

4. Verfahren nach Anspruch 3,
bei dem aus den Amplituden der Fouriertransformierten F bei unterhalb einer Grundfrequenz $f_0$ liegenden Frequenzen ein Maß B für eine niederfrequente Schrottbewegung, aus den Amplituden der Fouriertransformierten F bei oberhalb der Grundfrequenz $f_0$ liegenden und die harmonischen Frequenzen nicht umfassenden Frequenzen f ein Maß E für eine hochfrequente Erschütterung, und aus den Amplituden der Fouriertransformierten F bei harmonischen und zwischen den harmonischen Frequenzen $mf_0$ liegenden Frequenzen f ein die Stabilität des Lichtbogens charakterisierendes Maß SSG ermittelt wird, aus denen der Parameter K berechnet wird.

5. Verfahren nach Anspruch 4,
bei dem der Parameter K mit Hilfe folgender Beziehungen ermittelt wird:

$$SV = B * E \qquad\qquad (1)$$

mit

$$B = \sum_{n=n0}^{n1} F^{-\alpha}(f_n) \qquad\qquad (2)$$

wobei $f_{n1} < f_0$ und $f_{n+1} - f_n = \Delta f << f_0$
und mit

$$E = \sum_{n=n2}^{n3} F^{\beta}(f_n) \qquad\qquad (3)$$

wobei $f_n \neq m*f_0$ und $f_{n2} > f_0,$ $2 \leq \beta \leq 10$ und m eine natürliche Zahl ist,
und

$$SSG = \left( \sum_{k=2}^{k_{max}} F(kf_0) \right) * \left( \sum_{n} F(f_n) \right) \Big/ F^2(f_0) \qquad (4)$$

mit $f_n \neq m * f_0$ und $f_n > f_o$, wobei k und m natürliche Zahlen sind und $f_n$ die in Gleichung (3) verwendeten Frequenzen sind und für $k_{max} \leq 10$ gilt,
und der Parameter K mit der Gleichung

$$K = a * SV + b * SSG \qquad (5)$$

berechnet wird, wobei a und b experimentell ermittelte Gewichtsfaktoren sind.

6. Schmelzanlage mit einem Lichtbogenofen (2) mit wenigstens einer Elektrode (4a-c) und mit zumindest einem an einer Wand (9) des Lichtbogenofens (2) angeordneten Körperschallaufnehmer (10) sowie mit einer Steuer- und Auswerteeinrichtung (12) zum Auswerten der mit dem zumindest einem Körperschallaufnehmer (10) aufgenommenen Körperschallsignale (S) und mit einer darin implementierten Software zum Durchführen eines der Verfahren nach den vorhergehenden Ansprüchen.

## FIG 1

## FIG 2

## FIG 3

Europäisches
Patentamt

European
Patent Office

Office européen
des brevets

# EUROPÄISCHER RECHERCHENBERICHT

**Nummer der Anmeldung**

EP 11 17 4514

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | BOH M ET AL: "Ergbenisse der körperschallbasierten Schaumschlackenregelung im Einsatz bei den Lech-Stahlwerken", STAHL UND EISEN, VERLAG STAHLEISEN, DUSSELDORF, DE, Bd. 130, Nr. 4, 16. April 2010 (2010-04-16), Seiten 65-71, XP001558172, ISSN: 0340-4803 * das ganze Dokument * ----- | 1-6 | INV. H05B7/148 F27B3/28 |
| X | DITTMER B ET AL: "Identifikation des Prozesszustandes von Drehstromlichtbogenöfen mittels Körperschall", STAHL UND EISEN, VERLAG STAHLEISEN, DUSSELDORF, DE, Bd. 129, Nr. 12, 17. Dezember 2009 (2009-12-17), Seiten 33-41, XP001556675, ISSN: 0340-4803 * das ganze Dokument * ----- | 1-6 | |
| A | WO 2009/095292 A1 (SIEMENS AG [DE]; DOEBBELER ARNO [DE]; KRUEGER KLAUS [DE]; MATSCHULLAT) 6. August 2009 (2009-08-06) * Zusammenfassung * * Seite 2, Zeilen 14-35 * * Seite 4, Zeilen 5-26 * * Seite 7, Zeilen 21-35 * * Seite 11, Zeilen 9-23 * ----- | 1-6 | RECHERCHIERTE SACHGEBIETE (IPC) H05B F27B |
| A | WO 2009/095396 A1 (SIEMENS AG [DE]; DOEBBELER ARNO [DE]; KRUEGER KLAUS [DE]; MATSCHULLAT) 6. August 2009 (2009-08-06) * Zusammenfassung * * Seite 2, Zeile 10 - Seite 3, Zeile 19 * ----- -/-- | 1-6 | |

Der vorliegende Recherchenbericht wurde für alle Patentansprüche erstellt

| Recherchenort | Abschlußdatum der Recherche | Prüfer |
|---|---|---|
| München | 16. November 2011 | de la Tassa Laforgue |

EPO FORM 1503 03.82 (P04C03)

Europäisches
Patentamt

European
Patent Office

Office européen
des brevets

# EUROPÄISCHER RECHERCHENBERICHT

**Nummer der Anmeldung**

EP 11 17 4514

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2007/009924 A1 (SIEMENS AG [DE]; RIEGER DETLEF [DE]; FINK DIETER [DE]; GERHARD DETLEF) 25. Januar 2007 (2007-01-25) * Zusammenfassung * * Seite 11, Zeile 27 - Seite 12, Zeile 5 * ----- | 1-6 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 16. November 2011 | de la Tassa Laforgue |

KATEGORIE DER GENANNTEN DOKUMENTE

X : von besonderer Bedeutung allein betrachtet
Y : von besonderer Bedeutung in Verbindung mit einer
　　anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
　　nach dem Anmeldedatum veröffentlicht worden ist
D : in der Anmeldung angeführtes Dokument
L : aus anderen Gründen angeführtes Dokument

...............................................................................................

& : Mitglied der gleichen Patentfamilie, übereinstimmendes
　　Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 11 17 4514

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-11-2011

| Im Recherchenbericht angeführtes Patentdokument | Datum der Veröffentlichung | Mitglied(er) der Patentfamilie | Datum der Veröffentlichung |
|---|---|---|---|
| WO 2009095292 A1 | 06-08-2009 | CN 101932735 A<br>DE 102008006958 A1<br>EP 2235221 A1<br>US 2011007773 A1<br>WO 2009095292 A1 | 29-12-2010<br>06-08-2009<br>06-10-2010<br>13-01-2011<br>06-08-2009 |
| WO 2009095396 A1 | 06-08-2009 | CN 101933394 A<br>DE 102008006965 A1<br>EP 2238805 A1<br>US 2010332160 A1<br>WO 2009095396 A1 | 29-12-2010<br>06-08-2009<br>13-10-2010<br>30-12-2010<br>06-08-2009 |
| WO 2007009924 A1 | 25-01-2007 | AR 055992 A1<br>BR PI0613414 A2<br>CA 2615929 A1<br>EP 1910763 A1<br>JP 2009503419 A<br>KR 20080022585 A<br>KR 20100092067 A<br>US 2008285615 A1<br>US 2010315098 A1<br>WO 2007009924 A1 | 12-09-2007<br>11-01-2011<br>25-01-2007<br>16-04-2008<br>29-01-2009<br>11-03-2008<br>19-08-2010<br>20-11-2008<br>16-12-2010<br>25-01-2007 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009095292 A1
- WO 2009095396 A1